# EUROPEAN PATENT SPECIFICATION

(11) **EP 1 641 637 B1**
(45) Date of publication and mention of the grant of the patent: **21.04.2010**
(21) Application number: 03817394.4
(22) Date of filing: 04.07.2003
(51) Int. Cl.: B60C 11/03

(54) **PAIR OF FRONT AND REAR PNEUMATIC TIRES FOR MOTORCYCLES AND METHOD OF IMPROVING THE PERFORMANCE ON BOTH WET AND DRY GROUND OF A MOTORCYCLE EQUIPPED WITH SAID PAIR**
VORDER- UND HINTERLUFTREIFENPAAR FÜR MOTORRÄDER UND VERFAHREN ZUR VERBESSERUNG DER LEISTUNG EINES MIT DEM PAAR AUSGESTATTETEN MOTORRADS AUF NASSEM UND TROCKENEM GRUND
PAIRE DE PNEUMATIQUES AVANT ET ARRIERE POUR MOTOCYCLETTES, ET PROCEDE DESTINE A AMELIORER LE COMPORTEMENT SUR SOL MOUILLE ET SEC D'UNE MOTOCYCLETTE EQUIPEE DE LADITE PAIRE DE PNEUMATIQUES

(43) Date of publication of application: 05.04.2006
(73) Proprietor: Pirelli Tyre S.p.A., 20126 Milano (IT)
(72) Inventor: STEINBACH, Gunter, I-20126 Milano (DE)
(74) Representative: Bottero, Claudio
(86) International application number: PCT/EP2003/007261
(87) International publication number: WO 2005/005169

(56) References cited:
- EP-A- 0 822 103
- PATENT ABSTRACTS OF JAPAN vol. 2000, no. 05, 14 September 2000 (2000-09-14) -& JP 2000 043509 A (BRIDGESTONE CORP), 15 February 2000 (2000-02-15)
- PATENT ABSTRACTS OF JAPAN vol. 2000, no. 19, 5 June 2001 (2001-06-05) -& JP 2001 039105 A (SUMITOMO RUBBER IND LTD), 13 February 2001 (2001-02-13)
- PATENT ABSTRACTS OF JAPAN vol. 1999, no. 13, 30 November 1999 (1999-11-30) & JP 11 208218 A (BRIDGESTONE CORP), 3 August 1999 (1999-08-03)

## Description

### Background of the invention

The present invention relates to pair of pneumatic tires comprising a front tire and a rear tire to be mounted, respectively, on a front wheel and on a rear wheel of a motorcycle, each of said front and rear tires comprising a tread band provided with a plurality of grooves.

### Prior art

In the field of pneumatic tires for motorcycles and in particular in the field of pneumatic tires for the so-called high-performance and high-weight "sport-touring" motorcycles, one of the most difficult problems to be solved by tire manufactures is that of improving the performance on wet grounds and the kilometric yield, wear regularity and traction characteristics of the tires while finding at the same time the best possible compromise between these characteristics.

As is well known to any person skilled in the art, such a problem is particularly difficult to be solved in view of the fact that these characteristics are conflicting with one another since the performance on wet ground is largely related to the presence in the tread band of a sufficient number of grooves capable of draining the water present under the ground contacting area of the tires, while the kilometric yield, the wear regularity and the traction characteristics of the tires - on the contrary - would be beneficially influenced by reducing the number of grooves to the smallest possible extent.

This problem which is already difficult per se, is additionally further complicated by the fact that the performance on wet ground should be ensured both during running along straight stretches and along a bend.

Japanese patent application JP 2000-043509 discloses a pneumatic tire for motorcycles which is said to satisfy three traits of performance i.e., straight line stability, shimmy, and rain groove wandering and which is provided with a tread comprising a zigzag-form center land part having a comparatively small width formed in the tread central part by a pair of circumferentially stretching high-angle zigzagged grooves provided on the sides of a tire equator. Each of these grooves is provided with a plurality of long high-angle parts inclined at an angle θ with the tire equator ranging from 0 to 15° and short coupling parts to tie the high-angle parts, while the ratio D/P - wherein P is the rain groove pitch of the road surface on which the motorcycle is running while D is the distance between the outside angle apexes A and B on opposite sides of the zigzag-form center land part 5 - should range from 0.25 to 1.30.

Japanese patent application JP 2001-039105 discloses a combination of a front and of a rear tire which is said to compatibly realize wet performance and steering stability performance by limiting within a specified range the land ratio of a tire for a front wheel having a specified tread pattern to the land ratio of a tire for a rear wheel.

Japanese patent application JP 11-208218 discloses a a pneumatic tire for motorcycle which is said to improve the grip performance of the tire at turning or straight line acceleration on a wet road by providing the tread pattern of the tire with a plurality of main grooves inclined toward the sides of the tread surface and arranged in a funnel shape and by setting the inclination angle of each inclined main groove wall to satisfy a specific relation between the central and side regions thereof.

### Summary of the invention

According to the present invention, the Applicant has perceived that the problem of improving both the performance on wet ground and the kilometric yield, wear uniformity and traction characteristics of motorcycle tires may be solved by affording this problem from an overall perspective, that is by taking into consideration both the front and the rear tire at one time so as to find the way for improving their performance simultaneously.

In the light of this perception, the Applicant has found that the aforementioned problem may be solved by combining together a front and a rear tire each having a tread pattern provided with special design characteristics.

Therefore, the present invention provides a pair of pneumatic tires for motorcycles wherein the tread band of the front tire comprises:
a) at least one circumferential groove extending at the equatorial plane of the front tire within a central zone extending astride said equatorial plane;
b) a plurality of transversal grooves having an axially inner end lying within the central zone of the tread band and alternately extending from said central zone towards axially opposite shoulder zones of the tread band external to said central zone, at least some of said transversal grooves being connected to said at least one circumferential groove;
and wherein the tread band of the rear tire comprises an area defining a null sea/land ratio within a central zone of the tread band extending astride the equatorial plane of the rear tire and having a width of from about 5% to about 30% of the axial development of the tread band.

In the following description and in the appended claims, the term: "axial development" of the tread band or of any portion thereof, is used to indicate its extension in width as measured along the peripheral surface of the tire or, in other words, its development along a planar surface.

According to the invention, the Applicant has found that by adopting a tread band design as defined hereinabove in the front tire, the latter achieves a water draining capacity under the ground contacting area both during running along straight stretches and along a bend which is such that the rear tire travels on a "track" substantially free from water.

This advantageous technical effect may be ascribed to the water draining action exerted by both the at least one circumferential groove extending at the equatorial plane of the front tire and the aforementioned plurality of transversal grooves having an axially inner end lying within the central zone of the tread band.

Thanks to this advantageous technical effect achieved by the front tire, the tread band of the rear tire may be suitably designed to optimize its traction performance and wear resistance by providing said area defining a null sea/land ratio within a central zone of the tread band extending astride the equatorial plane of the rear tire and having a specified axial development.

In addition, the at least one circumferential groove extending at the equatorial plane of the front tire also acts as a hinge element during the tire running thereby achieving the additional advantageous technical effect of increasing the running stability of the front tire.

Accordingly, the pair of tires of the invention allows to achieve the following important advantages with respect to the tires of the prior art for the same type of use:
a) an improvement of the front tire capacity of draining off the water present under the tire ground-contacting area so as to better control any aquaplaning phenomena;
b) an improvement of the driving stability of the front tire on straight stretches;
c) an improvement of the traction performance of the rear tire;
d) an improvement of the wear uniformity of the rear tire with a substantial elimination of those phenomena of irregular and dishomogeneous wear of the rubber portions of the tread band referred to in the art by the term: "chunking";
e) an improvement of the wear resistance of the rear tire and, along therewith, of the kilometric yield of the tire.

In a preferred embodiment of the invention, the central zone of the tread band of the front tire has a width of from about 10% to about 35% of the axial development of the tread band.

The water draining capacity of the front tire can be increased by providing a suitable number of transversal grooves having an axially inner end lying within the very central zone of the tread band which is delegated to drain the water present under the ground contacting area away from the latter.

Preferably and in order to optimize the water draining capacity of the front tire, the central zone of the tread band of the front tire has a sea/land ratio between about 15% and about 30%.

In the following description and in the appended claims, the term: "sea/land ratio" of the tread band or of any portion thereof, is used to indicate the ratio between the area occupied by the grooves present in tread band or in any portion thereof and the total area of the tread band or, respectively, of any portion thereof.

According to a particularly preferred embodiment of the present invention, the tread band of the front tire further comprises axially opposite intermediate side zones lying between the central zone and the shoulder zones of the tread band, which intermediate side zones are provided with a specific width and with a specific sea/land ratio.

Advantageously, these axially opposite intermediate side zones further enhance the water draining capacity of the front tire when the tire travels along a bend, i.e. when the tire is inclined to provide the camber thrust necessary to counterbalance the centrifugal force.

According to this preferred embodiment, each of said intermediate side zones has a width of from about 15% to about 35% of the axial development of the tread band and a sea/land ratio between about 15% and about 35%.

In accordance with another preferred embodiment of the invention, the transversal grooves formed in the tread band of the front tire are substantially curvilinear so as to conform as much as possible to the so-called wear waves of the tread band.

Such a conformation of the grooves advantageously allows to reduce the wear of the tread band and to improve the wear uniformity and also contributes to reduce the tire noise during running of the vehicle.

Preferably, furthermore, the transversal grooves formed in the tread band of the front tire define with the running direction of the front tire an angle of from about 30° to about 60° and, still more preferably, of from about 40° to about 50°.

In the following description and in the appended claims, all the angles defined by the grooves in the front tire with its running direction are intended to be the angles defined by:
a) the tangent to the grooves at the intersection between the grooves and a circumferential line bisecting each of the half portions of the tread band defined by the equatorial plane of the front tire, with
b) the running direction of the front tire,
as measured upstream of the grooves.

In the following description and in the appended claims, the terms: "upstream" and "downstream" are used to indicate - with reference to the position of the grooves - those parts of the tread band that are stressed or get in touch with the ground during the tire rolling before and, respectively, after said grooves.

A substantial increase of the water draining capacity of the front tire during braking with a consequent improvement of the braking behavior of the tire, with a reduction in the braking distance of the motorcycle can be achieved.

Preferably, just to better follow the aforesaid wear waves, the transversal grooves formed in the tread band of the front tire have a curvature center positioned upstream of the same at the axially opposite intermediate side zones of the tread band, external to said central zone.

In such intermediate side zones, the transversal grooves formed in the tread band of the front tire preferably have a curvature radius of from about 40 to about 200 mm and, more preferably, of from about 60 to about 120 mm as measured from a curvature center positioned along a circumferential line bisecting each of the half portions of the tread band defined by the equatorial plane of the front tire.

In this way, it was observed that the water draining effect of the transversal grooves formed in the tread band of the front tire may advantageously be optimized while maintaining the aforementioned effects of wear reduction of the tread band and wear uniformity improvement, while contributing at the same time to reduce the tire noise during running of the vehicle.

According to a preferred embodiment of the present invention, at least some of the transversal grooves formed in the tread band of the front tire are connected to said at least one circumferential groove.

In this way, it was observed that the water draining effect of the tread band of the front tire within the aforementioned central zone may advantageously be optimized.

According to a preferred embodiment of the present invention, the transversal grooves formed in the tread band of the front tire are circumferentially distributed along the tread band in axially opposite groups comprising at least two transversal grooves.

Preferably, said axially opposite groups of transversal grooves are circumferentially staggered.

Also in this case, it was observed that by adopting this preferred groove arrangement the water draining effect of the tread band of the front tire may advantageously be optimized.

According to a preferred embodiment of the present invention, the front tire further comprises at least one transversal groove formed in the tread band on either side of the equatorial plane of the tire between said axially opposite and circumferentially staggered groups of transversal grooves.

Advantageously, this additional circumferentially "intermediate" transversal groove exerts the advantageous double function of increasing the water draining capacity of the tread band while optimizing the wear regularity thereof by helping to achieve a proper balance between the area occupied by the grooves and the area occupied by the rubber portions of the tread band.

In accordance with this embodiment, this additional circumferentially "intermediate" transversal groove is preferably provided with an axially inner end substantially lying at the borderline between the central zone and the axially opposite intermediate side zone of the tread band.

Thanks to preferred arrangement, the water draining capacity of the tread band when the tire travels along a bend may advantageously be further enhanced.

Preferably, furthermore, the transversal grooves formed in the tread band of the front tire are substantially parallel to one another.

Such a conformation of the grooves, advantageously allows to reduce the wear of the tread band and contributes to reduce both the tire noise during running of the vehicle and the onset of undesired vibrations during running.

According to a preferred embodiment of the present invention, the aforementioned at least one circumferential groove formed in the tread band of the front tire axially crosses the equatorial plane of the front tire in a substantially winding fashion.

More specifically, said at least one circumferential groove preferably comprises a plurality of curvilinear segments having respective circumferentially-staggered centers of curvature positioned at opposite sides of the equatorial plane of the front tire.

Advantageously, this geometrical configuration of the circumferential groove allows to increase the running stability of the front tire when traveling along uneven road surfaces and especially along road surfaces having longitudinal channels such as, for example, the so-called "rain grooves" formed in the road surface in the United States or those which may be formed in the road when the asphalt surface thereof is removed for replacement.

Preferably, the curvilinear segments of said at least one circumferential groove have a curvature radius of from about 40 to about 200 mm and preferably of from about 60 to about 120 mm so as to advantageously optimize the running stability of the front tire.

According to a preferred embodiment of the present invention, the rear tire has a curvature ratio lower than the front tire.

In the following description and in the appended claims, the term: "curvature ratio" is used to indicate the ratio between the height of the tread crown from the line passing by the axially opposite ends of the tread band or "camber" of the tread band, said line being measured at the equatorial plane, on the one hand, and the distance between said axially opposite ends of the tread band on the other hand.

According to a preferred embodiment of the present invention, the tread band of the rear tire comprises a plurality of transversal grooves alternately extending from the central zone towards axially opposite shoulder zones external to said central zone.

Thanks to this additional feature, it is advantageously possible to profitably attain a suitable water draining capacity of the rear tire while running along a bend to the benefit of the overall performance of the pair of tires on wet grounds.

During deep bending, in fact, the rear tire can partly or completely get out of the "track" of the front tire thus loosing the aforementioned advantage of running on a ground substantially freed from water. The transversal grooves optionally present on the tread band of the rear tire advantageously provide to said tire a water draining capacity also in extreme performance conditions.

Preferably, the tread band of the rear tire further comprises axially opposite intermediate side zones lying between the central zone and said shoulder zones of the tread band, each of said intermediate side zones having a width of from about 15% to 35% of the axial development of the tread band and a sea/land ratio between about 10% and about 30%.

In this way, it is advantageously possible to optimize the water draining capacity of the rear tire both when running along a bend just in the same way as for the front tire.

According to a preferred embodiment of the present invention, the transversal grooves formed in the tread band of the rear tire are substantially curvilinear so as to conform as much as possible to the so-called wear waves of the tread band.

Such a conformation of the grooves, in fact, advantageously allows to reduce the wear of the tread band, to improve the wear uniformity and contributes to reduce the tire noise during running of the vehicle.

Preferably, the transversal grooves formed in the tread band of the rear tire form with the running direction of the rear tire an angle of from about 30° to about 60° and, more preferably, of from about 40° to about 50°, thereby achieving the advantageous technical effect of substantially increasing the water draining capacity of the leaning rear tire during braking with a consequent improvement of the braking behavior of the tire, with a reduction in the braking distance of the motorcycle.

In the following description and in the appended claims, all the angles defined by the grooves in the rear tire with its running direction are intended to be the angles defined by:
a) the tangent to the grooves at the intersection between the grooves and a circumferential line bisecting each of the half portions of the tread band defined by the equatorial plane of the rear tire, with
b) the running direction of the rear tire,
as measured downstream of the grooves.

Preferably, just to better follow the aforesaid wear waves, the transversal grooves formed in the tread band of the rear tire have a curvature center positioned upstream of the same at the opposite intermediate side zones of the tread band, external to said central zone.

In such intermediate side zones, the transversal grooves formed in the tread band of the rear tire preferably have a curvature radius of from about 60 to about 240 mm and, more preferably, of from about 80 to about 160 mm, as measured from a curvature center positioned along a circumferential line bisecting each of the half portions of the tread band defined by the equatorial plane of the rear tire.

In this way, it was observed that the water draining effect of the transversal grooves formed in the tread band of the rear tire may advantageously be optimized while maintaining the aforementioned effects of wear reduction of the tread band, wear uniformity improvement and tire noise reduction during running of the vehicle.

According to a preferred embodiment of the present invention, the transversal grooves formed in the tread band of the rear tire are circumferentially distributed in axially opposite groups comprising at least two transversal grooves.

Preferably, said axially opposite groups of transversal grooves are circumferentially staggered.

It was observed that by adopting this preferred groove arrangement the water draining effect of the tread band of the rear tire may advantageously be optimized.

According to a preferred embodiment of the present invention, the rear tire further comprises at least one transversal groove formed in the tread band on either side of the equatorial plane of the tire between said axially opposite and circumferentially staggered groups of transversal grooves.

Just in the same way as for the front tire, this additional circumferentially "intermediate" transversal groove advantageously exerts the double function of increasing the water draining capacity of the tread band, especially when the rear tire travels along a bend, while optimizing the wear regularity thereof by helping to achieve a proper balance between the area occupied by the grooves and the area occupied by the rubber portions of the tread band.

Preferably, furthermore, the transversal grooves formed in the tread band of the rear tire are substantially parallel to one another.

Such a conformation of the grooves, in fact, advantageously allows to reduce the wear of the tread band and contributes to reduce the tire noise during running of the vehicle.

According to a preferred embodiment of the present invention, at least some of the transversal grooves formed in the tread band of the rear tire are circumferentially interconnected by bridging grooves.

In this way, it is advantageously possible to enhance the water draining capacity of the rear tire when the motorcycle runs along a bend which is a particularly critical condition for the wet grip performance of the motorcycle, since the rear tire is not perfectly aligned with the front tire due to the slip angle imparted to the latter.

According to a preferred embodiment of the present invention, at least some of the transversal grooves formed in the tread band of the rear tire are provided with a tapered end portion having a width progressively decreasing towards the equatorial plane of the rear tire.

In accordance with a further aspect of the invention, a motorcycle as defined in attached claim 27 is provided, which motorcycle is equipped with a front tire and a rear tire as described above mounted, respectively, on a front wheel and on a rear wheel of the vehicle.

In accordance with a further aspect of the invention, a method of improving the performance on both wet and dry ground of a motorcycle equipped with a front tire and a rear tire as defined in attached claim 28 is provided.

According to the present invention, step a) is accomplished by providing the front tire with a plurality of transversal grooves having an axially inner end lying within said central zone of the tread band of the front tire and alternately extending from said central zone towards axially opposite shoulder zones of the tread band external to said central zone of the front tire.

Preferably, step a) is accomplished by providing a sea/land ratio between about 15% and about 30% within a central zone of the tread band of the front tire having a width of from about 10% to about 35% of the axial development of said tread band.

Additionally, step a) is accomplished by providing at least one circumferential groove extending at the equatorial plane of the front tire, while at least some of said transversal grooves are connected to this at least one circumferential groove.

In this way, it is advantageously possible to optimize the water draining capacity of the front tire under its ground contacting area both when the motorcycle runs along a straight stretch and along a bend.

According to a preferred embodiment of the present invention, the method comprises the step of further enhancing the water draining capacity of the front tire by providing a plurality of transversal grooves defining a sea/land ratio between about 15% and about 35% within axially opposite intermediate side zones lying between the central zone and said shoulder zones of the tread band, each of said intermediate side zones having a width of from about 15% to about 35% of the axial development of the tread band of the front tire.

Preferably, the aforementioned transversal grooves formed in the tread band of the front tire define with the running direction of the front tire an angle of from about 30° to about 60° and, more preferably of from about 40° to about 50°.

According to a preferred embodiment of the present invention, the method further comprises the step of enhancing the water draining capacity of the rear tire when running along a bend by providing in its tread band a plurality of transversal grooves having an axially inner end lying within the central zone of the tread band of the rear tire and alternately extending from the central zone towards axially opposite shoulder zones external to said central zone.

Preferably, said plurality of transversal grooves formed in the tread band of the rear tire define a sea/land ratio between about 10% and about 30% within axially opposite intermediate side zones lying between the central zone and said shoulder zones of the tread band of the rear tire, each of said intermediate side zones having a width of from about 15% to about 35% of the axial development of the tread band of the rear tire.

Preferably, furthermore, the transversal grooves formed in the tread band of the rear tire define with the running direction of the rear tire an angle of from about 30° to about 60° and, more preferably of from about 40° to about 50°.

Further characteristics and advantages will be more readily apparent by the following description of a preferred embodiment according to the invention, solely provided by way of non limitative indication, reference being made to the attached drawings.

### Brief description of the drawings

In such drawings:
- Figure 1 shows a cross-section view of a front tire of a pair of motorcycle tires according to the invention, taken along line I-I of Figure 2;
- Figure 2 shows a plan development of a portion of the tread band of the front tire of Figure 1;
- Figure 3 shows a cross-section view of a rear tire of a pair of motorcycle tires according to the invention, taken along line III-III of Figure 4;
- Figure 4 shows a plan development of a portion of the tread band of the rear tire of Figure 3.

### Detailed description of the preferred embodiments

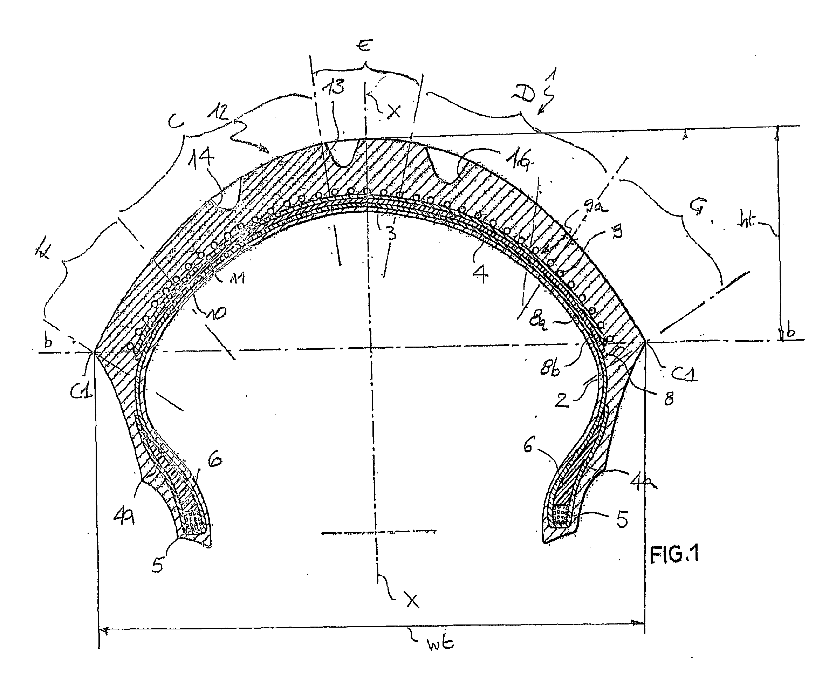

In Figure 1, a front tire of a pair of motorcycle tires according to the invention is generally indicated at 1.

As is known, in order to have a good directional stability and a good controllability of the vehicle, the front tire must have an appropriate section of reduced width, with respect to the rear tire, which gives rise to the need of a specific transverse curvature thereof.

The extent of this transverse curvature is defined by the specific value of the ratio between distance ht (measured along the equatorial plane X-X) of the tread crown from line b-b passing by the axially opposite ends C1 of the tread band, and distance wt measured along the chord of the tire between said axially opposite ends C1.

If the axially opposite tread band ends cannot be easily identified, for instance due to lack of a precise reference such as the corner indicated by C1 in Figure 1, the value of the tire maximum chord may be assumed as distance wt.

As has already been said, this ratio is called curvature ratio of the tire.

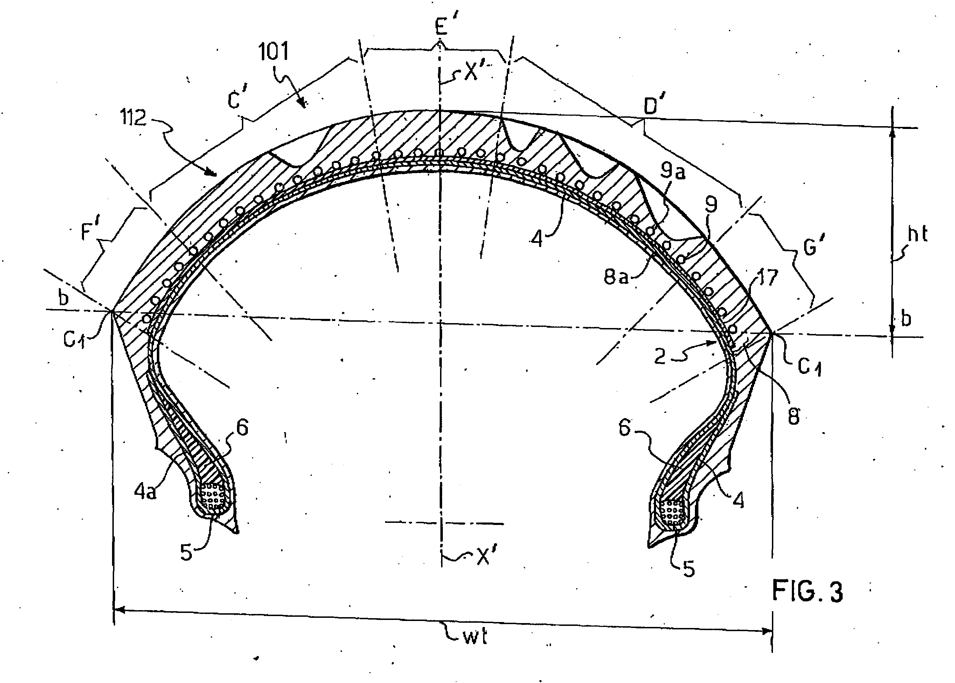

The curvature ratio for front tires of motor-vehicles is usually greater than 0.3 and in any case always greater than that of the corresponding rear tire 101 which is shown in Figure 3 and which will be described later on.

The front tire 1 comprises a carcass structure 2 having a central crown portion 3 comprising at least one radial carcass ply 4 defining two sidewalls the opposite side edges 4a of which are externally turned up around respective annular reinforcing structures 5, usually known as "bead cores".

On the external peripheral edge of the bead cores 5 an elastomeric filler 6 is applied which fills the space defined between the carcass ply 4 and the corresponding turned-up side edge 4a of the carcass ply 4.

A belt structure 8, which comprises at least one layer 8a including reinforcing elements is coaxially associated to said carcass structure 2.

The belt structure 8 can be constituted by a single layer 8a in which cords 9 are spirally wound on the central crown portion 3 from one end to the other of the carcass structure 2.

According to such an arrangement, the cords 9 form a plurality of circumferential coils 9a, substantially oriented according to the rolling direction of the front tire 1, which direction is usually called at "zero degree" with reference to its position with respect to the equatorial plane X-X of the tire.

Said cords 9 can be textile or metallic cords. Preferably said cords are cords made of steel having such a behavior that in a stress-deformation diagram said cords have a percent elongation exceeding 0.4%, more preferably included between 0.5 and 4%, with a load lower than 5% with respect to the tensile strength. Preferably said cords are made of high-carbon steel wires (HT), i.e. steel wires containing more than 0.9% carbon.

If textile cords are used, said cords can be made of synthetic fiber, such as nylon, rayon, PEN, PET, preferably a high-modulus synthetic fiber, in particular aramidic fiber (Kevlar® fibers, for example). Alternatively, hybrid cords can be employed which comprise at least one low-module thread (a nylon or rayon thread, for example), intertwined with at least one high-modulus thread (Kevlar®, for example).

As to possible alternative constructions of the belt structure 8, different embodiments may be possible, among which those skilled in the art may choose the most suitable one according to specific individual requirements.

Thus, for example, the belt structure 8 may additionally include - as shown in Figure 1 - a radially inner layer 8b including two strips 10, 11 of rubberized fabric provided with reinforcing elements - such as for example reinforcing cords - incorporated in an elastomeric matrix, oriented according to two preferred directions crossing each other in the two strips and preferably symmetrically inclined in relation to the equatorial plane X-X.

A tread band 12, by means of which the tire 1 gets in touch with the ground, is applied in a known manner onto the belt structure 8 described hereinabove.

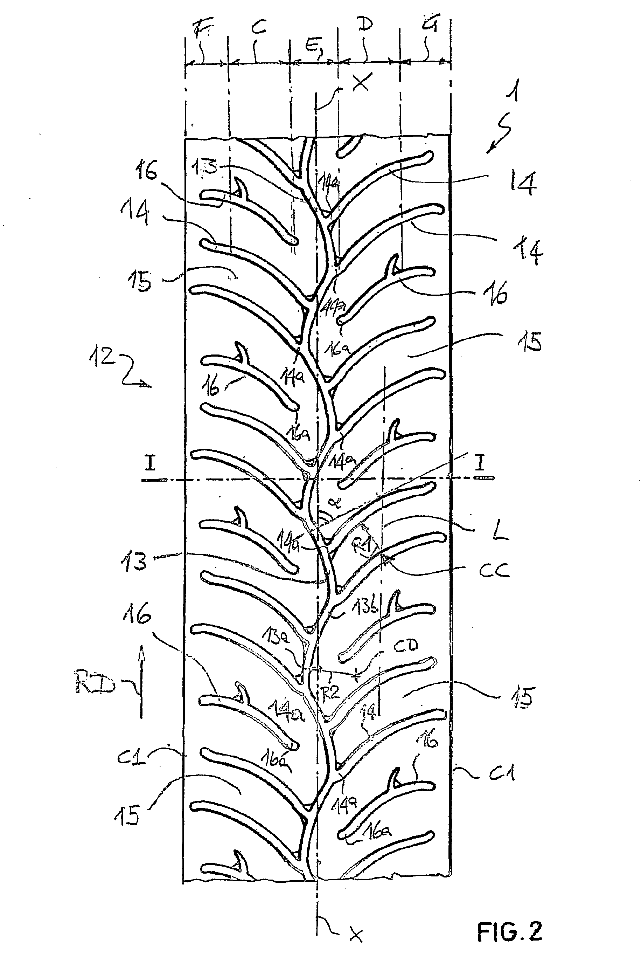

In the preferred embodiment illustrated in Figure 2, the tread band 12 of the front tire comprises:
a) a circumferential groove 13 extending at the equatorial plane X-X of the front tire 1 within a central zone E extending astride the equatorial plane X-X, and
b) a plurality of transversal grooves 14 having an axially inner end 14a lying within the central zone E of the tread band 12 and alternately extending from the central zone E towards axially opposite shoulder zones G, F of the tread band 12 external to the central zone E.

The aforementioned circumferential groove 13 and transversal grooves 14 define in the tread band 12 a plurality of rubber portions, all indicated by reference 15, generally extending in a direction substantially transverse to the running direction of the tire which is indicated by arrow RD in Figure 2.

Preferably, the central zone E of the tread band 12 extends astride the equatorial plane X-X of the front tire 1 and has a width of from about 10% to about 35% of the axial development of the tread band 12.

Still more preferably, the central zone E extends astride the equatorial plane X-X of the front tire 1 and has a width of from about 15% to about 25% of the axial development of the tread band 12.

In the preferred embodiment illustrated and in order to enhance the water draining capacity of the front tire 1, the central zone E of the tread band 12 has a sea/land ratio between about 15% and about 30% and, still more preferably, between about 20% and about 25%

Most preferably, the tread band 12 of the front tire 1 further comprises axially opposite intermediate side zones C, D lying between the central zone E and said shoulder zones F, G, each of said intermediate side zones C, D having a width of from about 15% to about 35% of the axial development of the tread band and a sea/land ratio between about 10% and about 30%.

More preferably, the intermediate side zones C, D having a width of from about 15% to about 25% of the axial development of the tread band and a sea/land ratio between about 15% and about 25%.

In the preferred embodiment illustrated, the transversal grooves 14 formed in the tread band 12 are substantially curvilinear so as to conform as much as possible to the so-called wear waves of the tread band.

Preferably, the transversal grooves 14 form with the running direction RD of the front tire 1 which is parallel to the equatorial plane X-X of the front tire 1 an angle α of from about 30° to about 60° and, more preferably, from about 40° to about 50°.

As mentioned hereinabove, such an angle α is defined by the tangent to the transversal grooves 14 at the intersection between the transversal grooves 14 and a circumferential line L bisecting each of the half portions of the tread band 12 defined by the equatorial plane X-X of the front tire, with the running direction RD of the front tire 1 as measured upstream of the transversal grooves 14 (see Figure 2).

In the preferred embodiment illustrated, the transversal grooves 14 have a curvature radius R1 of from about 40 to about 200 mm and, more preferably, from about 60 to about 120 mm as measured from a curvature center CC positioned along the aforementioned circumferential line L.

In the preferred embodiment illustrated, part of the transversal grooves 14 are connected to the circumferential groove 13.

Preferably, furthermore, the transversal grooves 14 formed in the tread band of the front tire are circumferentially distributed along the tread band 12 in axially opposite groups comprising two transversal grooves which in the preferred embodiment illustrated are both connected to the circumferential groove 13.

In the preferred embodiment illustrated, furthermore, the axially opposite groups of transversal grooves 14 are circumferentially staggered while the tread band 12 further comprises one transversal groove 16 formed on either side of the equatorial plane X-X of the front tire 1 between said axially opposite and circumferentially staggered groups of transversal grooves 14.

Preferably, this additional circumferentially "intermediate" transversal groove 16 is preferably provided with an axially inner end 16a substantially lying at the borderline between the central zone E and the axially opposite intermediate side zones C, D of the tread band 12.

Preferably, all the transversal grooves 14, 16 formed in the tread band 12 of the front tire 1 are also substantially parallel to one another.

Additionally, the circumferential groove 13 axially crosses the equatorial plane X-X of the front tire 1 in a substantially winding fashion and preferably comprises a plurality of curvilinear segments 13a, 13b having respective circumferentially staggered centers of curvature CD positioned at opposite sides of the equatorial plane X-X of the front tire 1.

Preferably, the curvilinear segments 13a, 13b have a curvature radius R2 of from about 40 to about 300 mm and, still more preferably, of from about 60 to about 180 mm.

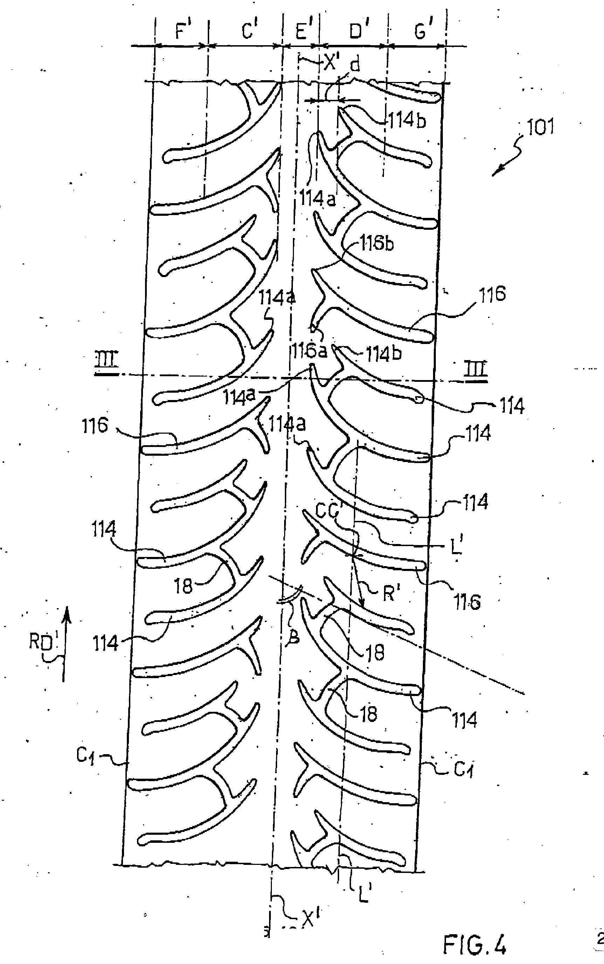

With reference to Figures 3 and 4, the rear tire 101 forming the pair of tires according to the present invention will now be described.

In the following description and in such figures, the elements of the rear tire 101 which are structurally or functionally equivalent to those previously illustrated with reference to the front tire 1 shown in Figures 1 and 2 will be indicated with the same reference numerals and will not be described any further.

According to a preferred embodiment of the present invention, the rear tire 101 has a curvature ratio lower than the front tire.

The belt structure 8 can be constituted by a single layer 8a including cords 9 forming a plurality of circumferential coils 9a, substantially oriented according to the rolling direction of the tire or "zero degree" cords. These cords can be analogous to those described for the front tire.

In the preferred embodiment illustrated in Figure 4, the tread band 112 of the rear tire 101 comprises an area defining a null sea/land ratio within a central zone E' thereof extending astride the equatorial plane X'-X' of the rear tire 101 and having a V width of from about 5% to about 30% of the axial development of the tread band 12.

Still more preferably, the central zone E' has a width of from about 10% to about 3 5% of the axial development of the tread band 112.

In the preferred embodiment illustrated, the tread band 112 of the rear tire 101 comprises a plurality of transversal grooves 114 alternately extending from the central zone E' towards axially opposite shoulder zones F', G' external to the central zone E'.

Preferably, at least some of the transversal grooves 114 have an axially inner end 114a substantially lying at the borderline between the central zone E' and axially opposite intermediate side zones C', D' of the tread band 112 lying between the central zone E' and the shoulder zones F', G' of the tread band 112.

Preferably, each of said intermediate side zones C', D' has a width of from about 15% to 35% and, more preferably, of from about 20% to 30%, of the axial development of the tread band and a sea/land ratio between about 10% and about 30% and, more preferably, of from about 15% to 25%.

In the preferred embodiment illustrated, the transversal grooves 114 formed in the tread band 112 of the rear tire 101 are substantially curvilinear so as to conform as much as V possible to the so-called wear waves of the tread band.

Preferably, the transversal grooves 114 formed in the tread band 112 of the rear tire 101 form with the running direction RD' of the rear tire 101 an angle β of from about 30° to about 60° and, more preferably, of from about 40° to about 50°.

As mentioned hereinabove, such an angle β is defined by the tangent to the transversal grooves 114 at the intersection between the transversal grooves 114 and a circumferential line L' bisecting each of the half portions of the tread band 112 defined by the equatorial plane X'-X' of the rear tire 101, with the running direction RD' of the tire 101 as measured downstream of the transversal grooves 114 (see Figure 4).

Preferably, just to better follow the aforesaid wear waves, the transversal grooves 114 formed in the tread band 112 of the rear tire 101 have a curvature center CC' positioned upstream of the same at the opposite intermediate side zones C', D' of the tread band 112, external to said central zone E'.

In such intermediate side zones C', D', the transversal grooves 114 formed in the tread band 112 of the rear tire preferably have a curvature radius R1' of from about 60 to about 240 mm and, still more preferably, of from about 80 to about 160 mm, as measured from a curvature center CC' positioned along a circumferential line L' bisecting each of the half portions of the tread band 112 defined by the equatorial plane X'-X' of the rear tire 101.

In the preferred embodiment illustrated, the transversal grooves 114 formed in the tread band 112 of the rear tire 101 are circumferentially distributed in axially opposite groups each comprising three transversal grooves 114.

Preferably, said axially opposite groups of transversal grooves 114 are circumferentially staggered.

Preferably, furthermore, at least one of the three transversal grooves 114 belonging to each of said axially opposite groups of transversal grooves has an axially inner end 114b lying at a predetermined distance d from the borderline between the central zone E' and axially opposite intermediate side zones C', D' of the tread band 112.

In this way it is advantageously possible to improve the wet performance of the rear tire while running along a bend.

In the preferred embodiment illustrated, the rear tire 101 further comprises a plurality of transversal grooves 116 formed in the tread band 112 on either side of the equatorial plane X'-X' of the rear tire 101 between said axially opposite and circumferentially staggered groups of transversal grooves 114.

Preferably, the transversal grooves 116 have a couple of axially inner ends 116a, 116b substantially lying at the borderline between the central zone E and axially opposite intermediate side zones C', D' of the tread band 112 lying between the central zone E' and the shoulder zones F', G' of the tread band 112.

Preferably, furthermore, the transversal grooves 114, 116 formed in the tread band 112 of the rear tire 101 are substantially parallel to one another.

In the preferred embodiment illustrated, at least some of the transversal grooves 114 formed in the tread band 112 of the rear tire 101 and, more specifically, the transversal grooves 114 included in said axially opposite and circumferentially staggered groups of transversal grooves, are circumferentially interconnected by bridging grooves 18.

In the preferred embodiment illustrated, furthermore, at least some and preferably all of the transversal grooves 114, 116 formed in the tread band 112 of the rear tire 101 are provided with an end portion or with a couple of end portions which are substantially tapered. In other words, the end portions of the transversal grooves 114, 116 have a V-shaped configuration, having a width progressively decreasing towards the equatorial plane X'-X' of the rear tire 101.

In accordance with the invention, a motorcycle equipped with a front tire 1 and a rear tire 101 as described above mounted, respectively, on its front wheel and on its rear wheel may advantageously achieve: better performances on both wet and dry ground coupled with an enhanced kilometric yield, wear uniformity and traction characteristics of such a pair of tires.

According to the invention, a method of improving the performance on both wet and dry ground of such a motorcycle comprises, in particular, the steps of:
a) enhancing the water draining capacity of the front tire 1 under its ground contacting area within the central zone E extending astride the equatorial plane X-X of the front tire 1 by providing the front tire 1 with a tread band 12 comprising:
   a1) the aforementioned at least one circumferential groove 13 extending at the equatorial plane X-X of the front tire 1 within the central zone E;
   a2) the aforementioned plurality of transversal grooves 14 having an axially inner end 14a lying within the central zone E of the tread band 12 and alternately extending from the central zone E towards the axially opposite shoulder zones F, G of the tread band 12 external to the central zone E, at least some of the transversal grooves 14 being connected to said at least one circumferential groove 13;
b) enhancing the traction capacity of the rear tire 101 by providing a null sea/land ratio within a central zone E' of the tread band 112 extending astride the equatorial plane X'-X' of the rear tire 101 and having a width of from about 5% to about 30% of the axial development of the tread band 112.

Repeated tests carried out by the Applicant have shown that the pair of motorcycle tires according to the invention, are capable of solving in an entirely satisfactory way the posed problem of improving both the performance on wet ground and the kilometric yield, wear uniformity and traction characteristics of motorcycle tires.

These results and especially the improvement of the performance on wet ground could be considered entirely surprising taking into account that they are achieved by reducing in the rear tractive tire the number of grooves in the most critical area, i.e. the central zone of the tread band, that is by reducing the number of those structural elements - the grooves - delegated to drain the water away from the ground contacting area.

Obviously, those skilled in the art may introduce variants and modifications in the above described invention, in order to satisfy specific and contingent requirements, which variants and modifications fall anyhow within the scope of protection as is defined by the appended claims.

## Claims

1. A pair of pneumatic tires (1, 101) comprising a front tire (1) and a rear tire (101) to be mounted, respectively, on a front wheel and on a rear wheel of a motorcycle, each of said front (1) and rear (101) tires comprising a tread band (12) provided with a plurality of grooves (13, 14, 16, 18, 114, 116),
wherein the tread band (12) of the front tire (1) comprises:
a) at least one circumferential groove (13) extending at the equatorial plane (X-X) of the front tire (1) within a central zone (E) extending astride said equatorial plane (X-X);
b) a plurality of transversal grooves (14) having an axially inner end (14a) lying within said central zone (E) of the tread band (12) and alternately extending from said central zone (E) towards axially opposite shoulder zones (F, G) of the tread band external to said central zone (E), at least some of said transversal grooves being connected to said at least one circumferential groove (13);
**characterized in that**
the tread band (112) of the rear tire (101) comprises an area defining a null sea/land ratio within a central zone (E') of the tread band (112) extending astride the equatorial plane (X'-X') of the rear tire (101) and having a width of from about 5% to about 30% of the axial development of the tread band (112).

2. A pair of pneumatic tires (1, 101) according to claim 1, wherein the central zone (E) of the tread band (12) of the front tire (1) has a width of from about 10% to about 35% of the axial development of the tread band (12).

3. A pair of pneumatic tires (1, 101) according to claims 1 or 2, wherein the central zone (E) of the tread band (12) of the front tire (1) has a sea/land ratio between about 15% and about 30%.

4. A pair of pneumatic tires (1, 101) according to claim 1, wherein the tread band (12) of the front tire (1) further comprises axially opposite intermediate side zones (C, D) lying between the central zone (E) and said shoulder zones (F, G), each of said intermediate side zones (C, D) having a width of from about 15% to about 35% of the axial development of the tread band (12) and a sea/land ratio between about 15% and about 35%.

5. A pair of pneumatic tires (1, 101) according to claim 1, wherein the transversal grooves (14) formed in the tread band (12) of the front tire (1) are substantially curvilinear.

6. A pair of pneumatic tires (1, 101) according to claim 1 or 5, wherein said transversal grooves (14) formed in the tread band (12) of the front tire (1) define with the running direction (RD) of the front tire (1) an angle (α) of from about 30° to about 60°.

7. A pair of pneumatic tires (1, 101) according to claim 5, wherein the transversal grooves (14) formed in the tread band (12) of the front tire (1) have a curvature radius (R1) of from about 40 to about 200 mm as measured from a curvature center (CC) positioned along a circumferential line (L) bisecting each of the half portions of the tread band (12) defined by the equatorial plane (X-X) of the front tire (1).

8. A pair of pneumatic tires (1, 101) according to claim 1, wherein the transversal grooves (14) formed in the tread band (12) of the front tire (1) are circumferentially distributed along the tread band (12) in axially opposite groups comprising at least two transversal grooves (14).

9. A pair of pneumatic tires (1, 101) according to claim 8, wherein said axially opposite groups of transversal grooves (14) are circumferentially staggered.

10. A pair of pneumatic tires (1, 101) according to claim 8, wherein the front tire (1) further comprises at least one transversal groove (16) formed in the tread band (12) on either side of the equatorial plane (X-X) of the tire (1) between said axially opposite and circumferentially staggered groups of transversal grooves (14).

11. A pair of pneumatic tires (1, 101) according to anyone of the preceding claims,
wherein the transversal grooves (14, 16) formed in the tread band (12) of the front tire (1) are substantially parallel to one another.

12. A pair of pneumatic tires (1, 101) according to claim 1, wherein said at least one circumferential groove (13) formed in the tread band (12) of the front tire (1) axially crosses the equatorial plane (X-X) of the front tire (1) in a substantially undulated fashion.

13. A pair of pneumatic tires (1, 101) according to claim 12, wherein said at least one circumferential groove (13) comprises a plurality of curvilinear segments (13a, 13b) having respective circumferentially staggered centers of curvature (CD) positioned at opposite sides of the equatorial plane (X-X) of the front tire (1).

14. A pair of pneumatic tires (1, 101) according to claim 13, wherein said curvilinear segments (13a, 13b) have a curvature radius (R2) of from about 40 to about 300 mm.

15. A pair of pneumatic tires (1, 101) according to claim 1, wherein the rear tire (101) has a curvature ratio lower than the front tire (1).

16. A pair of pneumatic tires (1, 101) according to claim 1, wherein the tread band (112) of the rear tire (101) comprises a plurality of transversal grooves (114) alternately extending from the central zone (E') towards axially opposite shoulder zones (F', G') external to said central zone (E').

17. A pair of pneumatic tires (1, 101) according to claim 16, wherein the tread band (112) of the rear tire (101) further comprises axially opposite intermediate side zones (G', D') lying between the central zone (E') and said shoulder zones (F', G') of the tread band (112), each of said intermediate side zones (C', D') having a width of from about 15% to 35% of the axial development of the tread band (112) and a sea/land ratio between about 10% and about 30%.

18. A pair of pneumatic tires (1, 101) according to claim 16, wherein the transversal grooves (114) formed in the tread band (112) of the rear tire (101) are substantially curvilinear.

19. A pair of pneumatic tires (1, 101) according to claim 16, wherein said transversal grooves (114) formed in the tread band (112) of the rear tire (101) form with the running direction of the rear tire (101) an angle (β) of from about 30° to about 60°.

20. A pair of pneumatic tires (1, 101) according to claim 16, wherein the transversal grooves (114) formed in the tread band (112) of the rear tire (101) have a curvature radius (R1') of from about 60 to about 240 mm as measured from a curvature center (CC') positioned along a circumferential line (L') bisecting each of the half portions of the tread band (112) defined by the equatorial plane (X'-X') of the rear tire (101).

21. A pair of pneumatic tires (1, 101) according to claim 16, wherein the transversal grooves (114) are circumferentially distributed along the tread band (112) of the rear tire (101) in axially opposite groups comprising at least two transversal grooves (114).

22. A pair of pneumatic tires (1, 101) according to claim 21, wherein said axially opposite groups of transversal grooves (114) are circumferentially staggered.

23. A pair of pneumatic tires (1, 101) according to claim 21, wherein the rear tire (101) further comprises at least one transversal groove (116) formed in the tread band (112) on either side of the equatorial plane (X'-X') of the tire (101) between said axially opposite and circumferentially staggered groups of transversal grooves (114).

24. A pair of pneumatic tires (1, 101) according to anyone of claims 16-23, wherein the transversal grooves (114, 116) formed in the tread band (112) of the rear tire (101) are substantially parallel to one another.

25. A pair of pneumatic tires (1, 101) according to anyone of claims 16-24, wherein at least some of the transversal grooves (114) formed in the tread band (112) of the rear tire (101) are circumferentially interconnected by bridging grooves (18).

26. A pair of pneumatic tires (1, 101) according to anyone of claims 16-25, wherein at least some of the transversal grooves (114, 116) formed in the tread band (112) of the rear tire (101) are provided with a tapered end portion (114a, 116a, 116b) having a width progressively decreasing towards the equatorial plane (X'-X') of the rear tire (101).

27. A motorcycle equipped with a front tire (1) and a rear tire (101) mounted, respectively, on a front wheel and on a rear wheel thereof, wherein said front (1) and rear (101) tires are according to anyone of claims 1-26.

28. A method of improving the performance on both wet and dry ground of a motorcycle equipped with a front tire (1) and a rear tire (101) mounted, respectively, on a front wheel and on a rear wheel thereof, each of said front (1) and rear (101) tires comprising a tread band (12, 112) provided with a plurality of grooves (14, 16, 18, 114, 116), said method comprising the steps of:
a) enhancing the water draining capacity of the front tire (1) under its ground contacting area within a central zone (E) extending astride the equatorial plane (X-X) of the front tire (1) by providing the front tire (1) with a tread band (12) comprising:
a1) at least one circumferential groove (13) extending at the equatorial plane (X-X) of the front tire (1) within said central zone (E);
a2) a plurality of transversal grooves (14) having an axially inner end (14a) lying within said central zone (E) of the tread band (12) and alternately extending from said central zone (E) towards axially opposite shoulder zones (F, G) of the tread band (12) external to said central zone (E), at least some of said transversal grooves (14) being connected to said at least one circumferential groove (13);
**characterized by**
enhancing the traction capacity of the rear tire (101) by providing a null sea/land ratio within a central zone (E') of the tread band (112) extending astride the equatorial plane (X'-X') of the rear tire (101) and having a width of from about 5% to about 30% of the axial development of the tread band (112).

29. A method according to claim 28, wherein said step a) is accomplished by providing a sea/land ratio between about 15% and about 30% within a central zone (E) of the tread band (12) of the front tire (1) having a width of from about 10% to about 35% of the axial development of said tread band (12).

30. A method according to claim 28, comprising the step of further enhancing the water draining capacity of the front tire (1) by providing a plurality of transversal grooves (14, 16) defining a sea/land ratio between about 15% and about 35% within axially opposite intermediate side zones (C, D) lying between the central zone (E) and said shoulder zones (F, G) of the tread band (12), each of said intermediate side zones (C, D) having a width of from about 15% to about 35% of the axial development of the tread band (12) of the front tire (1).

31. A method according to claim 30, wherein said transversal grooves (14, 16) form with the running direction (RD) of the front tire (1) an angle (α) of from about 30° to about 60°.

32. A method according to claim 28, further comprising the step of enhancing the water draining capacity of the rear tire (101) by providing in its tread band (112) a plurality of transversal grooves (114) alternately extending from the central zone (E') towards axially opposite shoulder zones (F', G') external to said central zone (E') of the rear tire (101).

33. A method according to claim 32, wherein said plurality of transversal grooves (114) formed in the tread band (112) of the rear tire (101) define a sea/land ratio between about 10% and about 30% within axially opposite intermediate side zones (C', D') lying between the central zone (E') and said shoulder zones (F', G') of the tread band (112) of the rear tire (101), each of said intermediate side zones (C', D') having a width of from about 15% to about 35% of the axial development of the tread band (112) of the rear tire (101).

34. A method according to anyone of claims 32 or 33, wherein said transversal grooves (114) formed in the tread band (112) of the rear tire (101) define with the running direction (RD') of the rear tire (101) an angle (β) of from about 30° to about 60°.

## Patentansprüche

1. Paar von pneumatischen Reifen (1, 101), das einen Vorderreifen (1) und einen Hinterreifen (101) umfasst, die entsprechend auf einem Vorderrad und einem Hinterrad eines Motorrads anzubringen sind, wobei sowohl der Vorder- (1) als auch der Hinterreifen (101) ein Laufflächenband (12) umfasst, das mit einer Mehrzahl von Rillen (13, 14, 16, 18, 114, 116) vorgesehen ist,
wobei das Laufflächenband (12) des Vorderreifens (1) umfasst:
a) wenigstens eine Umfangsrille (13), die sich an der Äquatorebene (X-X) des Vorderreifens (1) innerhalb einer mittleren Zone (E) erstreckt, die sich rittlings der Äquatorebene (X-X) erstreckt;
b) eine Mehrzahl von Querrillen (14), die ein axiales inneres Ende (14a) aufweisen, das in der mittleren Zone (E) des Laufflächenbands (12) liegt, und sich abwechselnd von der mittleren Zone (E) zu den axial gegenüberliegenden Schulterzonen (F, G) des Laufflächenbands bezüglich der mittleren Zone (E) außen erstrecken, wobei wenigstens einige der Querrillen mit der wenigstens einen Umfangsrille (13) verbunden sind;
**dadurch gekennzeichnet, dass** das Laufflächenband (112) des Hinterreifens (101) einen Bereich umfasst, der ein Verhältnis von positivem zu negativem Profilanteil in einer mittleren Zone (E') des Laufflächenbands (112) von Null definiert, die sich rittlings der Äquatorebene (X'-X') des Hinterreifens (101) erstreckt und eine Breite von ungefähr 5% bis ungefähr 30% der axialen Entwicklung des Laufflächenbands (112) aufweist.

2. Paar von pneumatischen Reifen (1, 101) nach Anspruch 1, bei dem die mittlere Zone (E) des Laufflächenbands (12) des Vorderreifens (1) eine Breite von ungefähr 10% bis ungefähr 35% der axialen Entwicklung des Laufflächenbands (12) aufweist.

3. Paar von pneumatischen Reifen (1, 101) nach Anspruch 1 oder 2, bei dem die mittlere Zone (E) des Laufflächenbands (12) des Vorderreifens (1) ein Verhältnis von positivem zu negativem Profilanteil zwischen ungefähr 15% und ungefähr 30% aufweist.

4. Paar von pneumatischen Reifen (1, 101) nach Anspruch 1, bei dem das Laufflächenband (12) des Vorderreifens (1) ferner axial gegenüberliegende Zwischenseitenzonen (C, D) umfasst, die zwischen der mittleren Zone (E) und den Schulterzonen (F, G) liegen, wobei jede der Zwischenseitenzonen (C, D) eine Breite von ungefähr 50% bis ungefähr 35% der axialen Entwicklung des Laufflächenbands (12) und ein Verhältnis von positivem zu negativem Profilanteil zwischen ungefähr 15% und ungefähr 35% aufweist.

5. Paar von pneumatischen Reifen (1, 101) nach Anspruch 1, bei dem die Querrillen (14), die in dem Laufflächenband (12) des Vorderreifens (1) ausgebildet sind, im Wesentlichen krummlinig sind.

6. Paar von pneumatischen Reifen (1, 101) nach Anspruch 1 oder 5, bei dem die Querrillen (14), die in dem Laufflächenband (12) des Vorderreifens (1) ausgebildet sind, mit der Laufrichtung (RD) des Vorderreifens (1) einen Winkel (α) von ungefähr 30° bis ungefähr 60° definieren.

7. Paar von pneumatischen Reifen (1, 101) nach Anspruch 5, bei dem die Querrillen (14), die in dem Laufflächenband (12) des Vorderreifens (1) ausgebildet sind, einen Krümmungsradius (R1) von ungefähr 40 bis ungefähr 200 mm aufweisen, gemessen von einem Krümmungszentrum (CC), das entlang einer Umfangslinie (L) positioniert ist, die jede der halben Abschnitte des Laufflächenbands (12), die durch die Äquatorebene (X-X) des Vorderreifens (1) definiert sind, halbiert.

8. Paar von pneumatischen Reifen (1, 101) nach Anspruch 1, bei dem die Querrillen (14), die in dem Laufflächenband (12) des Vorderreifens (1) ausgebildet sind, in Umfangsrichtung entlang des Laufflächenbands (12) in axial gegenüberliegende Gruppen, die wenigstens zwei Querrillen (14) umfassen, aufgeteilt sind.

9. Paar von pneumatischen Reifen (1, 101) nach Anspruch 8, bei dem die axial gegenüberliegenden Gruppen der Querrillen (14) in Umfangsrichtung versetzt sind.

10. Paar von pneumatischen Reifen (1, 101) nach Anspruch 8, bei dem der Vorderreifen (1) ferner wenigstens eine Querrille (16) umfasst, die in dem Laufflächenband (12) auf jeder Seite der Äquatorebene (X-X) des Reifens (1) zwischen den axial gegenüberliegenden und in Umfangsrichtung versetzten Gruppen von Querrillen (14) ausgebildet ist.

11. Paar von pneumatischen Reifen (1, 101) nach einem der vorhergehenden Ansprüche, bei dem die Querrillen (14, 16), die in dem Laufflächenband (12) des Vorderreifens (1) ausgebildet sind, im Wesentlichen parallel zueinander sind.

12. Paar von pneumatischen Reifen (1, 101) nach Anspruch 1, bei dem die wenigstens eine Umfangsrille (13), die in dem Laufflächenband (12) des Vorderreifens (1) ausgebildet ist, die Äquatorlinie (X-X) des Vorderreifens (1) auf eine im Wesentlichen wellenförmige Weise axial quert.

13. Paar von pneumatischen Reifen (1, 101) nach Anspruch 12, bei dem die wenigstens eine Umfangsrille (13) eine Mehrzahl von krummlinigen Segmenten (13a, 13b) umfasst, die entsprechend in Umfangsrichtung versetzte Krümmungszentren (C, D) ausweisen, die auf gegenüberliegenden Seiten der Äquatorebene (X-X) des Vorderreifens (1) positioniert sind.

14. Paar von pneumatischen Reifen (1, 101) nach Anspruch 13, bei dem die krummlinigen Segmente (13a, 13b) einen Krümmungsradius (R2) von ungefähr 40 bis ungefähr 300 mm aufweisen.

15. Paar von pneumatischen Reifen (1, 101) nach Anspruch 1, bei dem der Hinterreifen (101) ein Krümmungsverhältnis aufweist, das kleiner als das des Vorderreifens (1) ist.

16. Paar von pneumatischen Reifen (1, 101) nach Anspruch 1, bei dem das Laufflächenband (112) des Hinerreifens (101) eine Mehrzahl von Querrillen (114) umfasst, die sich abwechselnd von der mittleren Zone (E') zu den axial gegenüberliegenden Schulterzonen (F', G') bezüglich der mittleren Zone (E') außen erstrecken.

17. Paar von pneumatischen Reifen (1, 101) nach Anspruch 16, bei dem das Laufflächenband (112) des Hinerreifens (101) ferner axial gegenüberliegende Zwischenseitenzonen (C', D') umfasst, die zwischen der mittleren Zone (E') und den Schulterzonen (F', G') des Laufflächenbands (112) liegen, wobei die Zwischenseitenzonen (C', D') eine Breite von ungefähr 15% bis 35% der axialen Entwicklung des Laufflächenbands (112) und ein Verhältnis von positivem zu negativem Profilanteil zwischen ungefähr 10% und ungefähr 30% aufweisen.

18. Paar von pneumatischen Reifen (1, 101) nach Anspruch 16, bei dem die Querrillen (114), die in dem Laufflächenband (112) des Hinterreifens (101) ausgebildet sind, im Wesentlichen krummlinig sind.

19. Paar von pneumatischen Reifen (1, 101) nach Anspruch 16, bei dem die Querrillen (114), die in dem Laufflächenband (112) des Hinterreifens (101) ausgebildet sind, mit der Laufrichtung des Hinterreifens (101) einen Winkel (β) von ungefähr 30° bis ungefähr 60° ausbilden.

20. Paar von pneumatischen Reifen (1, 101) nach Anspruch 16, bei dem die Querrillen (114), die in dem Laufflächenband (112) des Hinterreifens (101) ausgebildet sind, einen Krümmungsradius (R1') von ungefähr 60 bis ungefähr 240 mm aufweisen, gemessen von einem Krümmungszentrum (CC'), das entlang einer Umfangslinie (L') positioniert ist, die jeden der halben Abschnitte des Laufflächenbands (112), die durch die Äquatorebene (X'-X') des Hinterreifens (101) definiert sind, halbiert.

21. Paar von pneumatischen Reifen (1, 101) nach Anspruch 16, bei dem die Querrillen (114) in Umfangsrichtung entlang des Laufflächenbands (112) des Hinerreifens (101) in axial gegenüberliegende Gruppen, die wenigstens zwei Querrillen (114) umfassen, aufgeteilt sind.

22. Paar von pneumatischen Reifen (1, 101) nach Anspruch 21, bei dem die axial gegenüberliegenden Gruppen von Querrillen (114) in Umfangsrichtung versetzt sind.

23. Paar von pneumatischen Reifen (1, 101) nach Anspruch 21, bei dem der Hinerreifen (101) ferner wenigstens eine Querrille (116) umfasst, die in dem Laufflächenband (112) auf jeder Seite der Äquatorebene (X'-X') des Reifens (101) zwischen den axial gegenüberliegenden und in Umfangsrichtung versetzten Gruppen von Querrillen (114) ausgebildet ist.

24. Paar von pneumatischen Reifen (1, 101) nach einem der Ansprüche 16 bis 23, bei dem die Querrillen (114, 116), die in dem Laufflächenband (112) des Hinerreifens (101) ausgebildet sind, im Wesentlichen parallel zueinander sind.

25. Paar von pneumatischen Reifen (1, 101) nach einem der Ansprüche 16 bis 24, bei dem wenigstens einige der Querrillen (114), die in dem Laufflächenband (112) des Hinerreifens (101) ausgebildet sind, durch Brückenrillen (18) in Umfangsrichtung verbunden sind.

26. Paar von pneumatischen Reifen (1, 101) nach einem der Ansprüche 16 bis 25, bei dem wenigstens einige der Querrillen (114, 116), die in dem Laufflächenband (112) des Hinerreifens (101) ausgebildet sind, mit einem zugespitzten Endabschnitt (114a, 116a, 116b) vorgesehen sind, der eine Breite aufweist, die sich zur Äquatorebene (X'-X') des Hinterreifens (101) allmählich verringert.

27. Motorrad, das mit einem Vorderreifen (1) und einem Hinterreifen (101) ausgestattet ist, die entsprechend an einem Vorderrad und einem Hinterrad davon angebracht sind, wobei der Vorder- (1) und Hinterreifen (101) gemäß den Ansprüchen 1 bis 26 vorliegen.

28. Verfahren zur Verbesserung der Performance, sowohl auf nassem als auch trockenem Untergrund, eines Motorrads, das mit einem Vorderreifen (1) und einem Hinterreifen (101) ausgestattet ist, die entsprechend an einem Vorderrad und einem Hinterrad davon angebracht sind,
wobei sowohl das Vorder- (1) als auch Hinterrad (101) ein Laufflächenband (12, 112) umfasst, das mit einer Mehrzahl von Rillen (14, 16, 18, 114, 116) vorgesehen ist, wobei das Verfahren die Schritte umfasst:
a) Verbessern der Wasserabführkapazität des Vorderreifens (1) unter dessen Bodenkontaktbereich mit einer mittleren Zone (E), die sich rittlings der Äquatorebene (X-X) des Vorderreifens (1) erstreckt, durch Bereitstellen des Vorderreifens (1) mit einem Laufflächenband (12), das umfasst:
a1) wenigstens eine Umfangsrille (13), die sich an der Äquatorebene (X-X) des Vorderreifens (1) in der mittleren Zone (E) erstreckt;
a2) eine Mehrzahl von Querrillen (14), die ein axiales inneres Ende (14a) aufweisen, das in der mittleren Zone (E) des Laufflächenbands 12 liegt, und sich von der mittleren Zone (E) zu axial gegenüberliegenden Schulterzonen (F, G) des Laufflächenbands (12) bezüglich der mittleren Zone (E) außen erstrecken, wobei wenigstens einige der Querrillen (14) mit der wenigstens einen Umfangsrille (13) verbunden sind;
**gekennzeichnet durch** Verbessern der Traktionskapazität des Hinterreifens (101) **durch** Bereitstellen eines Verhältnisses von positivem zu negativem Profilanteil von Null in einer mittleren Zone (E') des Laufflächenbands (112), die sich rittlings der Äquatorebene (X'-X') des Hinterreifens (101) erstreckt und eine Breite von ungefähr 5% bis ungefähr 30% der axialen Entwicklung des Laufflächenbands (112) aufweist.

29. Verfahren nach Anspruch 28, bei dem der Schritt a) durch Bereitstellen eines Verhältnisses von positivem zu negativem Profilanteil zwischen ungefähr 15% und ungefähr 30% innerhalb einer mittleren Zone (E) des Laufflächenbands (12) des Vorderreifens (1) erzielt wird, die eine Breite von ungefähr 10% bis ungefähr 35% der axialen Entwicklung des Laufflächenbands (12) aufweist.

30. Verfahren nach Anspruch 28, umfassend den Schritt des weiter Verbesserns der Wasserabführkapazität des Vorderreifens (1) durch Bereitstellen einer Mehrzahl von Querrillen (14, 16), die ein Verhältnis von positivem zu negativem Profilanteil zwischen ungefähr 15% und ungefähr 35% definieren, innerhalb axial gegenüberliegender Zwischenseitenzonen (C, D), die zwischen der mittleren Zone (E) und den Schulterzonen (F, G) des Laufflächenbands (12) liegen, wobei jede der Zwischenseitenzonen (C, D) eine Breite von ungefähr 15% bis ungefähr 35% der axialen Entwicklung des Laufflächenbands (12) des Vorderreifens (1) aufweist.

31. Verfahren nach Anspruch 30, bei dem die Querrillen (14, 16) mit der Laufrichtung (R, D) des Vorderreifens (1) einen Winkel (α) von ungefähr 30° bis ungefähr 60° bilden.

32. Verfahren nach Anspruch 28, ferner umfassend den Schritt des Verbesserns der Wasserabführkapazität des Hinterreifens (101) durch Bereitstellen in dessen Laufflächenband (112) einer Mehrzahl von Querrillen (114), die sich abwechselnd von der mittleren Zone (E') zu den axial gegenüberliegenden Schulterzonen (F', G') bezüglich der mittleren Zone (E') des Hinterreifens (101) außen erstrecken.

33. Verfahren nach Anspruch 32, bei dem die Mehrzahl der Querrillen (114), die in dem Laufflächenband (112) des Hinterreifens (101) ausgebildet sind, ein Verhältnis von positivem zu negativem Profilanteil zwischen ungefähr 10% und ungefähr 30% innerhalb axial gegenüberliegender Zwischenseitenzonen (C', D') definieren, die zwischen der mittleren Zone (E') und den Schulterzonen (F', G') des Laufflächenbands (112) des Hinterreifens (101) liegen, wobei jede der Zwischenseitenzonen (C', D') eine Breite von ungefähr 15% bis ungefähr 35% der axialen Entwicklung des Laufflächenbands (112) des Hinterreifens (101) aufweist.

34. Verfahren nach Anspruch 32 oder 33, bei dem die Querrillen (114) in dem Laufflächenband (112) des Hinterreifens (101) mit der Laufrichtung (RD') des Hinterreifens (101) einen Winkel (β) von ungefähr 30° bis ungefähr 60° definieren.

## Revendications

1. Paire de pneumatiques (1, 101) comprenant un pneumatique avant (1) et un pneumatique arrière (101) à monter, respectivement, sur une roue avant et une roue arrière d'une motocyclette, chacune desdites roue avant (1) et roue arrière (101) comprenant une bande (12) de roulement pourvue de plusieurs rainures (13, 14, 16, 18, 114, 116),
dans laquelle la bande de roulement (12) du pneumatique avant (1) comprend :
a) au moins une rainure circonférentielle (13) s'étendant dans le plan équatorial (X-X) du pneumatique avant (1) à l'intérieur d'une zone centrale (E) s'étendant à cheval de part et d'autre du plan équatorial (X-X) ;
b) plusieurs rainures transversales (14) ayant une extrémité axialement intérieure (14a) s'étendant à l'intérieur de ladite zone centrale (E) de la bande de roulement (12) et s'étendant alternativement depuis ladite zone centrale (E) vers des zones (F, G) d'épaulement axialement opposées extérieures à ladite zone centrale (E), au moins une partie desdites rainures transversales étant reliées à ladite au moins une rainure circonférentielle (13) ;
**caractérisée en ce que** la bande de roulement (112) du pneumatique arrière (101) comprend une zone ayant un ratio creux / relief nul à l'intérieur d'une zone centrale (E') de la bande de roulement (112) s'étendant à cheval de part et d'autre du plan équatorial (X'-X') du pneumatique arrière (101) et ayant une largeur comprise entre environ 5% et environ 30% du développé axial de la bande de roulement (112).

2. Paire de pneumatiques (1, 101) selon la revendication 1, dans laquelle la zone centrale (E) de la bande de roulement (12) du pneumatique avant (1) a une largeur comprise entre environ 10% et environ 35% du développé axial de la bande de roulement (12).

3. Paire de pneumatiques (1, 101) selon la revendication 1 ou 2, dans laquelle la zone centrale (E) de la bande de roulement (12) du pneumatique avant (1) a un ratio creux / relief entre environ 15% et environ 30%.

4. Paire de pneumatiques (1, 101) selon la revendication 1, dans laquelle la bande de roulement (12) du pneumatique avant (1) comprend en outre des zones latérales (C, D) intermédiaires axialement opposées s'étendant entre la zone centrale (E) et lesdites zones d'épaulement (F, G), chacune desdites zones latérales (C, D) intermédiaires ayant une largeur comprise entre environ 15% et 35% du développé axial de la bande de roulement (12) et un ratio creux / relief compris entre environ 15% et environ 35%.

5. Paire de pneumatiques (1, 101) selon la revendication 1, dans laquelle les rainures transversales (14) formées dans la bande de roulement (12) du pneumatique avant (1) sont sensiblement curvilignes.

6. Paire de pneumatiques (1, 101) selon la revendication 1 ou 5, dans laquelle lesdites rainures transversales (15) formées dans la bande de roulement (12) du pneumatique avant (1) définissent avec la direction d'avance (RD) du pneumatique avant (1) un angle (α) compris entre environ 30° et environ 60°.

7. Paire de pneumatiques (1, 101) selon la revendication 5, dans laquelle les rainures transversales (14) formées dans la bande de roulement (12) du pneumatique avant (1) ont un rayon de courbure (R1) compris entre environ 40 et environ 200 mm mesuré depuis un centre de courbure (CC) positionné sur une ligne circonférentielle (L) bissectrice de chacune des demi-parties de la bande de roulement (12) définie par le plan équatorial (X-X) du pneumatique avant (1).

8. Paire de pneumatiques (1, 101) selon la revendication 1, dans laquelle les rainures transversales (14) formées dans la bande de roulement (12) du pneumatique avant (1) sont réparties sur la circonférence de la bande de roulement (12) en des groupes axialement opposés comprenant au moins deux rainures transversales (14).

9. Paire de pneumatiques (1, 101) selon la revendication 8, dans laquelle les groupes de rainures transversales axialement opposés (14) sont décalés sur la circonférence.

10. Paire de pneumatiques (1, 101) selon la revendication 8, dans laquelle le pneumatique avant (1) comprend en outre au moins une rainure transversale (16) formée dans la bande de roulement (12) sur l'un ou l'autre des côtés du plan équatorial (X-X) du pneumatique (1) entre lesdits groupes de rainures transversales (14) axialement opposés et décalés sur la circonférence.

11. Paire de pneumatiques (1, 101) selon l'une quelconque des revendications précédentes, dans lesquelles les rainures transversales (14, 16) formées dans la bande de roulement (12) du pneumatique avant (1) sont sensiblement parallèles entre elles.

12. Paire de pneumatiques (1, 101) selon la revendication 1, dans laquelle ladite au moins une rainure circonférentielle (13) formée dans la bande de roulement (12) du pneumatique avant (1) traverse axialement le plan équatorial (X-X) du pneumatique avant (1) d'une façon sensiblement ondulée.

13. Paire de pneumatiques (1, 101) selon la revendication 12, dans laquelle ladite au moins une rainure circonférentielle (13) comprend plusieurs segments curvilignes (13a, 13b) ayant des centres de courbures (CD) respectifs répartis sur la circonférence, positionnés sur des côté opposés du plan équatorial (X-X) du pneumatique avant (1).

14. Paire de pneumatiques (1, 101) selon la revendication 13, dans laquelle lesdits segments curvilignes (13a, 13b) ont un rayon de courbure (R2) compris entre environ 40 et environ 300 mm.

15. Paire de pneumatiques (1, 101) selon la revendication 1, dans laquelle le pneumatique arrière (101) a un ratio de courbure inférieur à celui du pneumatique avant (1).

16. Paire de pneumatiques (1, 101) selon la revendication 1, dans laquelle la bande de roulement (112) du pneumatique arrière (101) comprend plusieurs rainures transversales (114) s'étendant alternativement depuis une zone centrale (E') vers des zones d'épaulement (F', G') axialement opposées extérieures à ladite zone centrale (E').

17. Paire de pneumatiques (1, 101) selon la revendication 16, dans laquelle la bande de roulement (112) du pneumatique arrière (101) comprend en outre des zones latérales (C', D') intermédiaires axialement opposées s'étendant entre la zone centrale (E') et lesdites zones d'épaulement (F', G') de la bande de roulement (112), chacune desdites zones latérales (C', D') ayant une largeur comprise entre environ 15% et 35% du développé axial de la bande de roulement (112) et un ratio creux / relief compris entre environ 10% et environ 30%.

18. Paire de pneumatiques (1, 101) selon la revendication 16, dans laquelle les rainures transversales (114) formées sur la bande de roulement (112) du pneumatique arrière (101) sont sensiblement curvilignes.

19. Paire de pneumatiques (1, 101) selon la revendication 16, dans laquelle lesdites rainures transversales (114) formées sur la bande de roulement (112) du pneumatique arrière (101) forment avec la direction d'avance du pneu arrière (101) un angle (β) compris entre environ 30° et environ 60°.

20. Paire de pneumatiques (1, 101) selon la revendication 16, dans laquelle les rainures transversales (114) formées dans la bande de roulement (112) du pneumatique arrière (101) ont un rayon de courbure (R1') compris entre environ 60 et 240 mm mesuré par rapport à une centre de courbure (CC') positionné le long d'une ligne circonférentielle (L') bi-sectrice de chacune demies parties de la bande de roulement (112) définies par le plan équatorial (X'-X') du pneumatique arrière (101).

21. Paire de pneumatiques (1, 101) selon la revendication 16, dans laquelle les rainures transversales (114) sont réparties sur la circonférence de la bande de roulement (112) du pneumatique arrière (101) dans des groupes axialement opposés comprenant au moins deux rainures transversales (114).

22. Paire de pneumatiques (1, 101) selon la revendication 21, dans laquelle lesdits groupes axialement opposés de rainures transversales (114) sont décalés sur la circonférence.

23. Paire de pneumatiques (1, 101) selon la revendication 21, dans laquelle le pneumatique arrière (101) comprend en outre au moins une rainure transversale (116) formée dans la bande de roulement (112) sur l'un ou l'autre des côtés du plan équatorial (X'-X') du pneumatique (101) entre lesdits groupes de rainures transversales (114) axialement opposés et décalés sur la circonférence.

24. Paire de pneumatiques (1, 101) selon l'une quelconque des revendications 16-23, dans laquelle les rainures transversales (114, 116) formées sur la bande de roulement (112) du pneumatique arrière (101) sont sensiblement parallèles entre elles.

25. Paire de pneumatiques (1, 101) selon l'une quelconque des revendications 16-24, dans laquelle au moins une partie des rainures transversales (114) formées sur la bande de roulement (112) du pneumatique arrière (101) sont reliées entre elles sur la circonférence par des rainures formant pont.

26. Paire de pneumatiques (1, 101) selon l'une quelconque des revendications 16-25, dans lesquelles au moins une partie des rainures transversales (114, 116) formées sur la bande de roulement (112) du pneumatique arrière (101) est pourvue d'une partie d'extrémité fuselée (114a, 116a, 116b) ayant une largeur décroissant progressivement en direction du plan équatorial (X'-X') du pneumatique arrière (101).

27. Motocyclette équipée d'un pneumatique avant (1) et d'un pneumatique arrière (101) montés, respectivement sur une roue avant et sur une roue arrière de celle-ci, dans laquelle lesdits pneumatiques avant (1) et arrière (101) sont selon l'une quelconque des revendications 1-26.

28. Procédé d'amélioration des performances sur sol humide et sol sec d'une motocyclette équipée d'un pneumatique avant (1) et d'un pneumatique arrière (101) montés, respectivement, sur une roue avant et sur une roue arrière de celle-ci, chacun desdits pneumatiques avant (1) et arrière (101) comprenant une bande de roulement (12, 112) pourvu de plusieurs rainures (14, 16, 18, 114, 116), ledit procédé comprenant les étapes :
a) amélioration de la capacité de drainage du pneumatique avant (1) sous sa zone de contact au sol à l'intérieur d'une zone centrale (E) s'étendant à cheval de part et d'autre du plan équatorial (X-X) du pneumatique avant (1) en munissant le pneumatique avant (1) d'une bande de roulement (12) comprenant :
al) au moins une rainure circonférentielle (13) s'étendant dans le plan équatorial (X-X) du pneumatique avant (1) à l'intérieur de ladite zone centrale (E) ;
a2) plusieurs rainures transversales (14) ayant une extrémité intérieure (14a) s'étendant à l'intérieur de ladite zone centrale (E) de la bande de roulement et s'étendant alternativement depuis ladite zone centrale (E) vers des zones d'épaulement (F, G) axialement opposées de la bande de roulement (12) extérieures à ladite zone centrale (E), au moins une partie desdites rainures transversales (14) étant reliée à ladite au moins une rainure circonférentielle (13) ;
**caractérisé par** une amélioration de la capacité de traction du pneumatique arrière (101) en prévoyant une ratio creux / relief nul à l'intérieur d'une zone centrale (E') de la bande de roulement (112) s'étendant à cheval de part et d'autre du plan équatorial (X'-X') du pneumatique arrière (101) et ayant une largeur comprise entre environ 5% et environ 30% du développé axial de la bande de roulement (112).

29. Procédé selon la revendication 28, dans laquelle ladite étape a) est obtenue en prévoyant un ratio creux / relief compris entre environ 15% et environ 30% à l'intérieur d'une zone centrale (E) de la bande de roulement (12) du pneumatique avant ayant une largueur comprise entre environ 10% et environ 35% du développé axial de ladite bande de roulement (12).

30. Procédé selon la revendication 28, comprenant l'étape d'amélioration supplémentaire de la capacité de drainage de l'eau du pneumatique avant (1) en disposant plusieurs rainures transversales (14, 16) définissant un ratio creux / relief compris entre environ 15% et environ 35% à l'intérieur de zones latérales (C, D) intermédiaires axialement opposées, s'étendant entre la zone centrale (E) et lesdites zones d'épaulement (F, G) de la bande de roulement (12), chacune desdites zones latérales (C, D) intermédiaires ayant une largeur comprise entre environ 15% et environ 35% du développé axial de la bande de roulement (12) du pneumatique avant (1).

31. Procédé selon la revendication 30, dans laquelle lesdites rainures transversales (14, 16) forment avec la direction d'avance (RD) du pneu avant (1) un angle (α) compris entre environ 30° et environ 60°.

32. Procédé selon la revendication 28, comprenant l'étape d'amélioration de la capacité de drainage de l'eau du pneumatique arrière (101) en disposant sur sa bande de roulement (112) plusieurs rainures transversales (114) s'étendant alternativement depuis la zone centrale (E') vers des zones d'épaulement (F', G') axialement opposées extérieures à ladite zone centrale (E') du pneumatique arrière (101).

33. Procédé selon la revendication 32, dans laquelle lesdites plusieurs rainures transversales (114) formées sur la bande de roulement (112) du pneumatique arrière (101) définissent un ratio creux / relief compris entre environ 10% et environ 30% à l'intérieur des zones latérales (C', D') intermédiaires axialement opposées s'étendant entre la zone centrale (E') et lesdites zones d'épaulement (F', G') de la bande de roulement (112) du pneumatique arrière (101), chacune desdites zones latérales (C', D') intermédiaires ayant une largeur comprise entre environ 15% et environ 35% du développé axial de la bande de roulement (112) du pneumatique arrière (101).

34. Procédé selon l'une quelconque des revendications 32 ou 33, dans laquelle lesdites rainures transversales (114) formées dans la bande de roulement (112) du pneumatique arrière (101) définissent avec la direction d'avance (RD') du pneumatique arrière (101) un angle (β) compris entre environ 30° et environ 60°.
